# EUROPÄISCHE PATENTANMELDUNG

(11) **EP 1 289 116 A2**
(43) Veröffentlichungstag der Anmeldung: **05.03.2003**
(21) Anmeldenummer: 02405709.3
(22) Anmeldetag: 20.08.2002
(51) Int. Cl.: H02P 7/638

(54) **Schaltkreis und Verfahren zur Drehzahlregelung von Universalelektromotoren**

(30) Priorität: 31.08.2001 DE 10142732
(71) Anmelder: HILTI Aktiengesellschaft, 9494 Schaan (LI)
(72) Erfinder: Osselmann, Claus, 82269 Kaltenberg (DE); Hellmann, Peter, 86836 Obermeitingen (DE); Troeder, Lutz, 82299 Türkenfeld (DE)
(74) Vertreter: Wildi, Roland

(57) **Zusammenfassung**

Ein Verfahren und ein Schaltkreis (2) zur Drehzahlregelung von einem Elektromotor (1) mit einer hohen Drehzahl (N1) in zumindest einer weiteren, niedrigeren Drehzahl (N2, N3, N4), wobei in einem ersten priorisierten Schritt die Drehzahlregelung abhängig von einer vorgewählten Drehzahl (N1, N2) auf eine niedrigere effektive Motorspannung (Ueff) nach oben beschränkt wird und in einem zweiten Schritt abhängig von dem, für die Regelung auf diese konstante Drehzahl (N1, N2) benötigten, Drehmoment (M) die effektive Motorspannung (Ueff) innerhalb des beschränkten Bereiches geregelt wird.

## Beschreibung

Die Erfindung bezeichnet einen Schaltkreis und ein Verfahren zur Drehzahlregelung von Universalelektromotoren, insbesondere in tragbaren Werkzeuggeräten, in zumindest einer weiteren, niedrigeren Drehzahl.

Eine weitere, niedrigere Drehzahl für ein Handwerkzeuggerät wird üblicherweise durch eine phasenanschnittsgesteuerte Spannungsregelung zur Reduzierung der effektiven Motorspannung für einen im Reihenschluss betriebenen Elektromotor realisiert. Durch die Verschiebung der von der effektiven Motorspannung als Parameter abhängigen Drehzahl-Drehmoment-Motorkennlinie sinkt somit die Drehzahl über dem Drehmoment ab. Der Nachteil dieses einfachen Steuerverfahrens besteht in der starken Lastabhängigkeit bei kleinen Drehzahlen.

Nach der EP594907 wird ein Elektromotor mit einer unterschiedlichen Motorkennlinie bei hoher und bei niedriger Drehzahl betrieben, wobei mittels eines von der Spannung der Feldwicklung über einen aus einzelnen Z-Dioden und einem Leistungsschalter gebildeten Schaltkreis getriggerten Nebenimpedanz der Feldwicklung die minimale Drehzahl begrenzt wird. Die Drehzahl bleibt jedoch weiter lastabhängig.

Nach der DE19940409 wird ein Elektromotor mit einer weiteren, niedrigeren Geschwindigkeitsstufe mittels einer über dem Drehmoment phasenanschnittsgesteuerten Spannungsregelung durch die von der effektiven Motorspannung als Parameter abhängigen Motorkennlinie auf eine jeweils konstante Drehzahl geregelt. Das somit bei niedrigen Drehzahlen höhere mögliche Drehmoment, kann jedoch bei einem thermisch konstruktiv auf die hohen Drehzahlen ausgelegten Elektromotor oberhalb eines thermischen Grenzdrehmomentes liegen.

Nach der DE3612193 wird bei einem Elektromotor in einem Handwerkzeuggerät mit Drehzahlregelung bei Überschreiten eines Umschaltdrehmoments vor dem Grenzdrehmoment die Regelung bei der aktuellen effektiven Motorspannung ausgesetzt, damit entsprechend der aktuellen Motorkennlinie die Drehzahl für den Nutzer deutlich vernehmbar abfällt.

Zudem wird nach der DE19609986C1 ein Elektromotor in einem Handwerkzeuggerät bei Überschreiten eines Grenzdrehmomentes bis zum Ausschalten durch den Nutzer mit Antriebspausen zeitlich unterbrochen, innerhalb welcher das Handwerkzeuggerät nur begrenzt zweckentsprechend nutzbar ist.

Die Aufgabe der Erfindung besteht in der Realisierung einer Drehzahlregelung für eine niedrigere Drehzahl bis zu einem Grenzdrehmoment.

Die Aufgabe wird im wesentlichen durch die Merkmale der unabhängigen Ansprüche gelöst. Vorteilhafte Weiterbildungen ergeben sich aus den Unteransprüchen.

Im wesentlichen weist ein, vorzugsweise im Reihenschluss, betriebener Elektromotor, welcher über einen Schaltkreis zur Drehzahlregelung mit einer Stromquelle verbunden ist, zumindest einen weiteren, niedrigeren geregelten Drehzahlbereich auf, wobei in einem ersten priorisierten Schritt die Drehzahlregelung abhängig von der vorgewählten Drehzahl auf eine niedrigere effektive Motorspannung nach oben beschränkt wird und in einem zweiten Schritt abhängig von dem, für die Regelung auf diese konstante Drehzahl benötigten, Drehmoment die effektive Motorspannung innerhalb des beschränkten Bereiches geregelt wird.

Durch die Beschränkung der effektiven Motorspannung auf einen Wert kleiner der effektiven Betriebsspannung der Stromquelle steht nicht mehr die gesamte Schar von den, über die effektive Motorspannung parametrisierten, Motorkennlinien für die Regelung des Elektromotors zur Verfügung. Kritische Motorkennlinien, welche im niedrigen Drehzahlbereich eine Überschreitung des Grenzdrehmoments bewirken, stehen somit bei der niedrigen Drehzahl nicht zur Drehzahlregelung zur Verfügung.

Vorteilhaft wird die effektive Motorspannung aus der Betriebsspannung der Stromquelle über eine übliche Phasenanschnittssteuerung oder Phasenabschnittssteuerung erzeugt, welche technisch einfach realisierbar ist.

Vorteilhaft wird bei der Phasenanschnittssteuerung oder Phasenabschnittssteuerung über einen weiteren Steuereingang für den minimalen Phasenwinkel die effektive Motorspannung nach oben beschränkt, wodurch diese Schranke einfach in eine übliche Phasenanschnittssteuerung oder Phasenabschnittssteuerung integrierbar ist.

Vorteilhaft wird beim Erreichen eines Umschaltdrehmoments vor dem Grenzdrehmoment in einem dritten Schritt vom Schaltkreis eine noch niedrigere Drehzahl vorgewählt und das Verfahren mit dem ersten Schritt fortgesetzt, wodurch der Elektromotor beim wiederholten Erreichen des Umschaltdrehmoments in diskreten Stufen mit jeweils geringerer, konstant geregelter Drehzahl betrieben wird und ein mit diesem angetriebenes Handwerkzeuggerät somit weiterhin vollständig zweckentsprechend nutzbar ist.

Vorteilhaft wird im Stillstandsfall mit der Drehzahl Null vom Schaltkreis eine niedrige effektive Motorspannung erzeugt, welche zur Generierung eines Restmomentes beim ruhenden Elektromotor dauerhaft zulässig und zum Wiederanlaufen vorteilhaft ist, oder alternativ der effektive Stromfluss unterbrochen, wodurch sicher abgeschaltet wird.

Die Erfindung wird bezüglich eines vorteilhaften Ausführungsbeispiels näher erläutert mit:
Fig. 1 als Drehzahlregelung über die effektive Motorspannung Ueff
Fig. 2 als Drehzahlregelung in Stufen

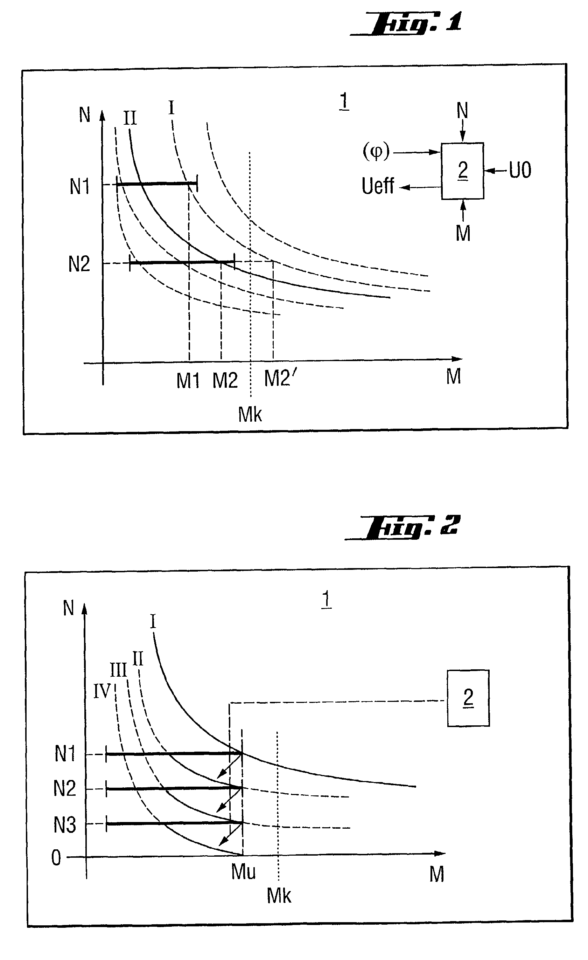

Nach Fig. 1 wird ein Elektromotor 1 mit einer Schar von, von einer effektiven Motorspannung Ueff als Parameter abhängigen, Drehzahl-Drehmoment-Kennlinien I, II über eine Regelung für die Drehzahl N bezüglich des variablen Drehmoments M neben einer ersten Drehzahl N1 in einer weiteren, niedrigeren Drehzahl N2 geregelt. Die effektive Motorspannung Ueff ist eine Funktion des Phasenwinkels ϕ einer Phasenanschnittssteuerung eines mit einer Betriebsspannung U0 der Stromquelle verbundenen Schaltkreises 2, welcher unmittelbar oder mittelbar mit der Drehzahl N und dem Drehmoment M angesteuert wird. Bezüglich einer, einer hohen effektiven Motorspannung Ueff zugeordneten, höheren Drehzahl-Drehmoment-Motorkennlinie I liegt das der Drehzahl N1 zugeordnete Drehmoment M1 unterhalb eines thermisch zulässigen kritischen Grenzdrehmoments Mk, das der Drehzahl N2 zugeordnete Drehmoment M2' läge jedoch oberhalb. Der fett dargestellte, der Drehzahl N1 zugeordnete, Regelbereich ist somit für die Drehzahlregelung zulässig. Bezüglich einer weiteren, niedrigeren Drehzahl N2, welcher erfindungsgemäss im ersten Schritt eine beschränkte, niedrigere effektive Motorspannung Ueff mit einer niedrigeren Drehzahl-Drehmoment-Motorkennlinie II zugeordnet ist, liegt auch das der Drehzahl N2 zugeordnete Drehmoment M2 unterhalb eines thermisch zulässigen kritischen Grenzdrehmoments Mk, wodurch im zweiten Schritt auch der fett dargestellte, der Drehzahl N2 zugeordnete, Regelbereich somit für die Drehzahlregelung zulässig ist.

Nach Fig. 2 wird für einen Elektromotor 1 beim Erreichen eines Umschaltdrehmoments Mu vor dem kritischen Grenzdrehmoment Mk durch das Drehmoment wiederholt in einem dritten Schritt vom Schaltkreis 2 in Stufen der Drehzahl N eine bezüglich einer Drehzahl N1 niedrigere Drehzahl N2 bzw. bezüglich einer Drehzahl N2 niedrigere Drehzahl N3 und bezüglich einer Drehzahl N3 niedrigere Drehzahl N4 vorgewählt und die verfügbaren Drehzahl-Drehmoment-Kennlinien I, II, III, IV beschränkt. Im Stillstandsfall mit der Drehzahl N=0 wird entlang der Drehzahl-Drehmoment-Motorkennlinie IV ein Restmoment entsprechend des Grenzdrehmoments Mk erzeugt.

## Patentansprüche

1. Verfahren zur Drehzahlregelung von einem Elektromotor (1) mit einer hohen Drehzahl (N1) in zumindest einer weiteren, niedrigeren Drehzahl (N2, N3, N4) mit einem, mit einer Stromquelle verbundenen, Schaltkreis (2) zur Drehzahlregelung, **dadurch gekennzeichnet, dass** in einem ersten priorisierten Schritt die Drehzahlregelung abhängig von einer vorgewählten Drehzahl (N1, N2) auf eine niedrigere effektive Motorspannung (Ueff) nach oben beschränkt wird und in einem zweiten Schritt abhängig von dem, für die Regelung auf diese konstante Drehzahl (N1, N2) benötigten, Drehmoment (M) die effektive Motorspannung (Ueff) innerhalb des beschränkten Bereiches geregelt wird.

2. Verfahren zur Drehzahlregelung nach Anspruch 1, **dadurch gekennzeichnet, dass** die effektive Motorspannung (Ueff) im Schaltkreis (2) aus der Betriebsspannung (U0) der Stromquelle über eine übliche Phasenanschnittssteuerung oder Phasenabschnittssteuerung erzeugt wird.

3. Verfahren zur Drehzahlregelung nach Anspruch 2, **dadurch gekennzeichnet, dass** im Schaltkreis (2) über einen weiteren Steuereingang für den minimalen Phasenwinkel (ϕ) die effektive Motorspannung nach oben beschränkt wird.

4. Verfahren zur Drehzahlregelung nach einem der Ansprüche 1 bis 3, **dadurch gekennzeichnet, dass** beim Erreichen eines Umschaltdrehmoments (Mu) vor dem Grenzdrehmoment (Mk) in einem dritten Schritt vom Schaltkreis (2) eine jeweils niedrigere Drehzahl (N2, N3, N4) vorgewählt und das Verfahren mit dem ersten Schritt fortgesetzt wird.

5. Verfahren zur Drehzahlregelung nach Anspruch 4, **dadurch gekennzeichnet, dass** der Elektromotor (1) beim wiederholten Erreichen des Umschaltdrehmoments (Mu) in diskreten Stufen mit jeweils geringerer, konstant geregelter Drehzahl (N2 > N3 > N4) betrieben wird.

6. Verfahren zur Drehzahlregelung nach einem der Ansprüche 1 bis 5, **dadurch gekennzeichnet, dass** im Stillstandsfall mit der Drehzahl (N) von Null vom Schaltkreis (2) eine niedrige effektive Motorspannung (Ueff) erzeugt wird.

7. Verfahren zur Drehzahlregelung nach einem der Ansprüche 1 bis 5, **dadurch gekennzeichnet, dass** im Stillstandsfall mit der Drehzahl (N) von Null vom Schaltkreis (2) der effektive Stromfluss unterbrochen wird.

8. Verwendung eines Verfahren zur Drehzahlregelung nach einem der Ansprüche 1 bis 7, zur Regelung des Antriebs eines portablen Elektrowerkzeuggerätes.

9. Schaltkreis zur Drehzahlregelung nach einem der Ansprüche 1 bis 7, **dadurch gekennzeichnet, dass** der Schaltkreis (2) mit einem Elektromotor (1) und einer Stromquelle verbunden ist.

10. Schaltkreis nach Anspruch 9, **dadurch gekennzeichnet, dass** er in einem portablen Elektrowerkzeuggerät angeordnet ist.
